# EUROPEAN PATENT SPECIFICATION

(11) **EP 4 439 837 B1**
(45) Date of publication and mention of the grant of the patent: **18.02.2026**
(21) Application number: 23835881.6
(22) Date of filing: 07.07.2023
(51) Int. Cl.: H01M 50/264, H01M 50/242, H01M 50/204

(54) **BATTERY PACK**
BATTERIEPACK
BLOC-BATTERIE

(30) Priority: 08.07.2022 KR 20220084652
(43) Date of publication of application: 02.10.2024
(73) Proprietor: LG Energy Solution, Ltd., Seoul 07335 (KR)
(72) Inventor: YANG, Chang Hyeon, Daejeon 34122 (KR); CHOI, Jong Hwa, Daejeon 34122 (KR); LEE, Jae Hyun, Daejeon 34122 (KR); LEE, Hyoung Suk, Daejeon 34122 (KR); SHIN, Ju Hwan, Daejeon 34122 (KR)
(74) Representative: Plasseraud IP
(86) International application number: PCT/KR2023/009644
(87) International publication number: WO 2024/010415

(56) References cited:
- WO-A1-2021/098466
- CN-A- 112 271 386
- CN-B- 108 807 727
- CN-U- 213 520 174
- CN-U- 213 520 174
- JP-A- 2012 101 663
- KR-A- 20200 033 778
- KR-B1- 102 090 309
- US-B2- 9 748 538

## Description

### [Technical Field]

The present invention relates to a battery pack. More particularly, in the battery pack of the present invention, a bolt is inserted from a side surface of a pack case towards an auxiliary partition wall, which is installed between battery modules to separate the battery modules, to fix the auxiliary partition wall, and a side support force of the battery module is improved through the inserted bolt.

### [Background Art]

Types of secondary batteries include lithium ion batteries, lithium polymer batteries, nickel-cadmium batteries, nickel-hydrogen batteries, nickel-zinc batteries, and the like. An operating voltage of a unit secondary battery cell, that is, a unit battery cell, is about 2.5 V to 4.2 V. Accordingly, when a higher output voltage is required, a plurality of battery cells are connected in series to configure a battery pack. In addition, depending on the charge/discharge capacity required for the battery pack, a plurality of battery cells are connected in parallel to configure a battery pack. Thus, the number of battery cells included in the battery pack may be variously set according to the required output voltage or charge/discharge capacity.

For example, when a plurality of battery cells are connected in series/parallel to configure a battery pack, a battery module including the plurality of battery cells is first configured.

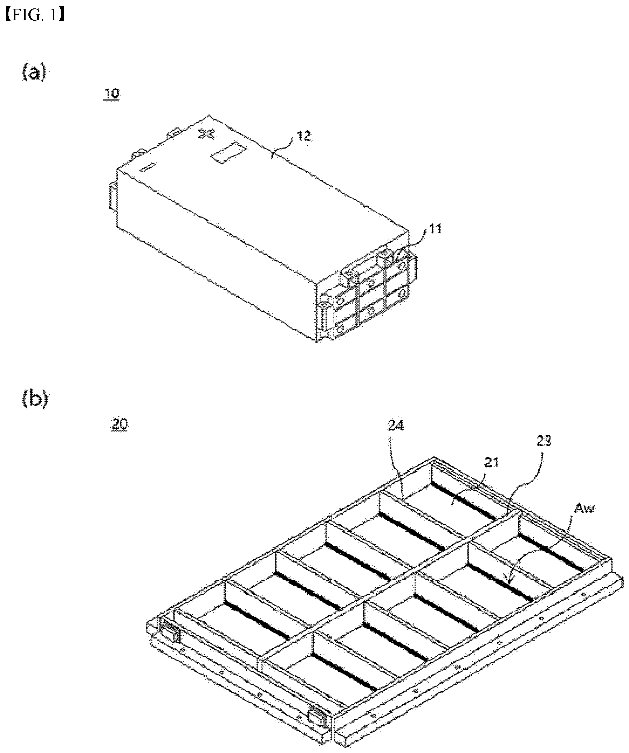

FIG. 1 illustrates a generally used battery module 10 and a pack case 20 included in a battery pack that accommodates the battery module 10.
(a) of FIG. 1 illustrates one form of the battery module 10. As illustrated in the drawing, the conventional battery module 10 has a form in which end plates 11 are coupled to each of front and rear sides, and side surfaces are surrounded and protected by a module frame 12. In recent years, the battery module 10 having a form in which the module frame 12 is excluded and cells therein are exposed has also been used.
(b) of FIG. 1 illustrates a pack case 20 that provides a space in which the battery module 10 is accommodated among typical battery packs. In the pack case 20 illustrated in (b) of FIG. 1, each battery module 10 has a lower portion supported by a base plate 21 in a space partitioned by a main partition wall 23 and an auxiliary partition wall 24 and is electrically connected to the other battery modules 10 in series or parallel.

During a charging/discharging process, an abnormal phenomenon may occur in the battery module 10 included in the battery pack, one example of which is a swelling phenomenon. The swelling phenomenon is a phenomenon in which a battery cell expands due to gas or the like generated inside the battery cell. The swelling phenomenon may first proceed in each battery cell accommodated in the battery module 10, and consequently affect the battery module 10.

In general, as illustrated in (b) of FIG. 1, a side surface of each battery module 10 accommodated in the pack case 20 may be supported by the auxiliary partition wall 24, and since the auxiliary partition wall 24 is not installed for preventing swelling, the auxiliary partition wall 24 may not withstand an expansion force of the battery module 10, in which a swelling phenomenon occurs, and may be damaged.

Meanwhile, a plurality of battery modules 10 accommodated in the battery pack may be separated by the auxiliary partition wall 24, and the auxiliary partition wall 24 may be screw-coupled to the base plate 21, or may be coupled to the base plate 21 by a method of welding a welded portion Aw, which is a boundary between the auxiliary partition wall 24 and the base plate 21.

However, in the case of the structure that is welded as described above, a problem may arise in which the base plate 21 or the auxiliary partition wall 24 may be bent or distorted due to welding heat, and it was inconvenient to change welding equipment every time the shape of the pack case 20 is changed.

Accordingly, there is a need for a new solution that can suppress the shape deformation of the battery module as much as possible even when a swelling phenomenon occurs in each battery module accommodated in the pack case, and there is a need for a new method that can fix the auxiliary partition wall to the inside of the pack case by a method other than welding.

### [Related Art Documents]

Korean Patent Publication No. 10-2018-0113906
Document CN 213 520 174 U discloses a battery case for a battery pack.

### [Disclosure]

### [Technical Problem]

Accordingly, the present invention has been invented to solve the above problems, and an object of the present invention is to minimize welding inside a battery pack and install an auxiliary partition wall.

In addition, another object of the present invention is to provide a battery pack having a structure capable of suppressing a swelling phenomenon of a battery module accommodated therein.

Other objects and advantages of the present invention can be understood by the following description, and will be more clearly understood by the embodiments of the present invention. It will also be readily appreciated that the objects and advantages of the present invention may be realized by the means and combinations thereof indicated in the claims.

### [Technical Solution]

According to the present invention, there is provided a battery pack according to claim 1. The battery pack after the invention may present one or more feature(s) of dependent claims 2 to 14, in any combination allowed by the claims.

### [Advantageous Effects]

According to the present invention, an auxiliary partition wall can be fixed while minimizing welding inside a battery pack.

Further, according to the present invention, by separating a plurality of battery modules accommodated inside a battery pack and improving the strength of an auxiliary partition wall that supports a side surface of the battery module, a swelling phenomenon of the battery module can be suppressed.

### [Brief Description of the Drawings]

FIG. 1 illustrates a conventional battery module and a pack case included in a battery pack.
FIG. 2 is a perspective view of a pack case included in a battery pack according to a first embodiment of the present invention.
FIG. 3 illustrates a long bolt member.
FIG. 4 is a partial cut-away perspective view of an auxiliary partition wall into which the long bolt member is inserted.
FIG. 5 illustrates the pack case of FIG. 2, from which one auxiliary partition wall is separated.
FIG. 6 partially illustrates a main partition wall and a side wall of FIG. 5 from which the auxiliary partition wall is separated.
FIG. 7 is a cut-away cross-sectional view of the pack case.
FIG. 8 is a partial cut-away view of an auxiliary partition wall included in a battery pack according to a second embodiment of the present invention.
FIG. 9 is a cut-away cross-sectional view of a pack case included in a battery pack according to a third embodiment.
FIG. 10 is a cut-away cross-sectional view of a pack case included in a battery pack according to a fourth embodiment.

### [Detailed Description of the Preferred Embodiments]

Hereinafter, exemplary embodiment of the present invention will be described in detail with reference to the accompanying drawings.

Accordingly, the embodiments described in the present specification and the configurations described in the drawings are only the most preferred embodiments of the present invention, and do not represent all of the technical ideas of the present invention.

In addition, in describing the present invention, when it is determined that a detailed description of a related known configuration or feature can unnecessarily obscure the subject matter of the present invention, such a detailed description will be omitted.

The embodiments of the present invention are provided to more completely describe the present invention to a person skilled in the art, and thus the shape and size of components in the drawings can be exaggerated, omitted, or schematically illustrated for clearer description. Thus, the size or ratio of each component does not entirely reflect the actual size or ratio thereof.

The present invention relates to a battery pack configured to accommodate battery modules each including a cell stack in which a plurality of battery cells are stacked, and in the battery pack, an auxiliary partition wall 140 configured to separate the battery modules is fixed by a bolt inserted into a side surface of a pack case 100, which improves a side support force of the battery module.

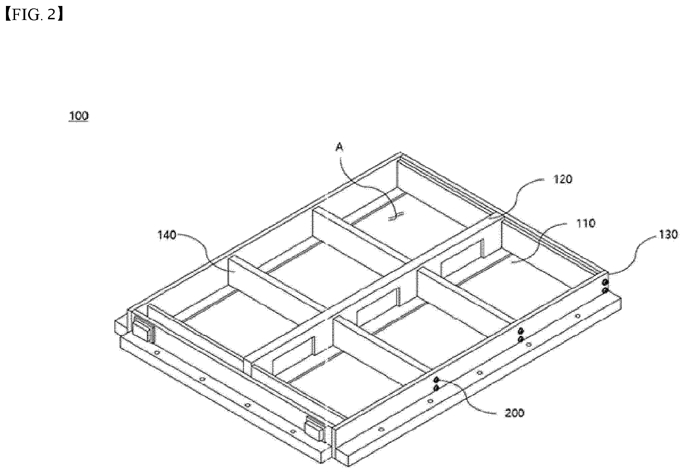

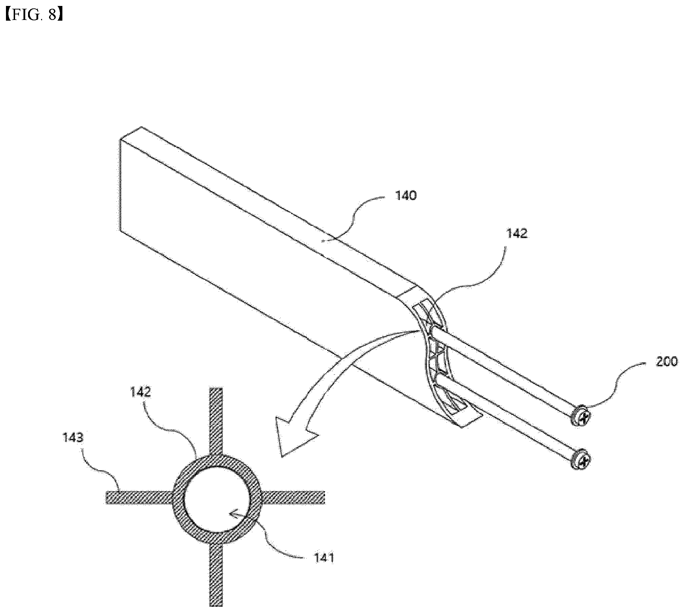

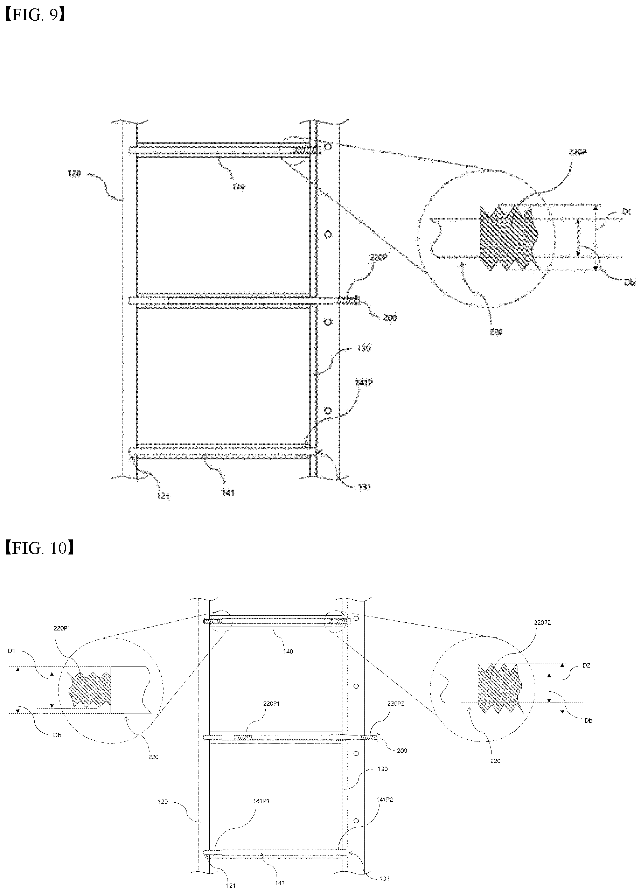

FIGS. 2 to 7 relate to a battery pack according to a first embodiment of the present invention, FIG. 8 relates to a battery pack according to a second embodiment of the present invention, FIG. 9 relates to a battery pack according to a third embodiment of the present invention, and FIG. 10 relates to a battery pack according to a fourth embodiment of the present invention.

Hereinafter, the battery pack of the present invention will be described for each embodiment with reference to the above drawings.

### (First embodiment)

FIG. 2 is a perspective view of a pack case 100 included in a battery pack according to the first embodiment of the present invention.

As shown in FIG. 2, the battery pack of the present invention includes the pack case 100 and a long bolt member 200 coupled to the pack case 100.

The pack case 100 includes a base plate 110, a main partition wall 120, side walls 130, and auxiliary partition walls 140.

The pack case 100 includes a plurality of module regions A, in each of which a battery module is directly seated, and the module regions A are partitioned by the main partition wall 120, the side walls 130, and the auxiliary partition walls 140.

The base plate 110 serves to support lower portions of the battery modules accommodated in the pack case 100, and corresponds to a bottom of the pack case 100.

The main partition wall 120 serves to roughly divide a space on the base plate 110 into two spaces, and protect conducting wires and the like used inside the pack case 100 by inserting the wires and the like thereinto.

As shown in FIG. 2, the main partition wall 120 is coupled to a center portion of the base plate 110 and extends across the base plate 110.

The side wall 130 serves to support and protect an outer side surface of the battery module seated on the base plate 110.

As shown in FIG. 2, the side wall 130 is coupled along an edge of the base plate 110.

The auxiliary partition wall 140 serves to separate a pair of adjacent battery modules among a plurality of battery modules seated on the base plate 110.

As shown in FIG. 2, both ends of the auxiliary partition wall 140 are coupled to the main partition wall 120 and the side wall 130, respectively.

The auxiliary partition walls 140 are spaced apart from each other by a predetermined interval in a longitudinal direction of the pack case 100, and are coupled to the main partition wall 120.

The auxiliary partition wall 140 of the present invention can be relatively easily attached to and detached from the pack case 100. That is, the auxiliary partition wall 140 can be stably fixed to the pack case 100 without using a method such as welding. More specifically, the auxiliary partition wall 140 can be coupled to the main partition wall 120 and the side wall 130 by the long bolt member 200.

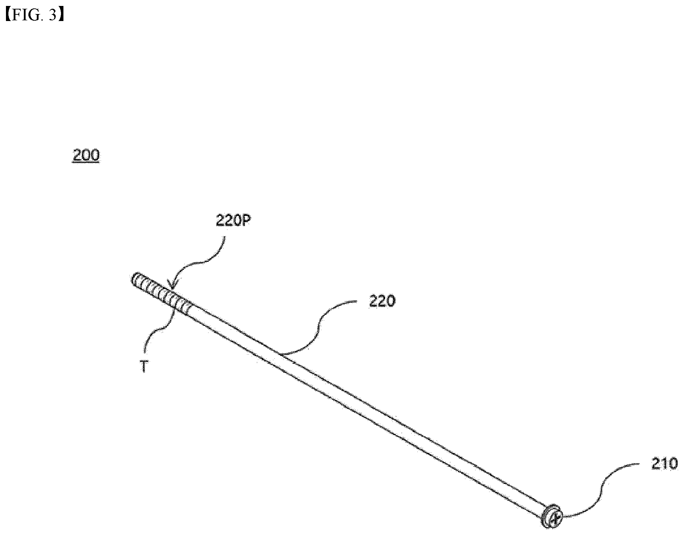

FIG. 3 illustrates the long bolt member 200.

The long bolt member 200 includes a screw head 210, and a screw body 220 extending from the screw head 210 and having a circular cross-section.

The long bolt member is coupled to the auxiliary partition wall 140 as the screw body 220 is inserted into the side surface of the pack case 100. Thus, a length of the long bolt member 200 may be greater than a separation distance between the main partition wall 120 and the side wall 130.

The screw body 220 may include a male screw portion 220P having a thread T formed to rotate around an outer surface thereof.

In the long bolt member 200 included in the battery pack according to the first embodiment of the present invention, as shown in FIG. 3, the male screw portion 220P is formed at an end portion of the screw body 220.

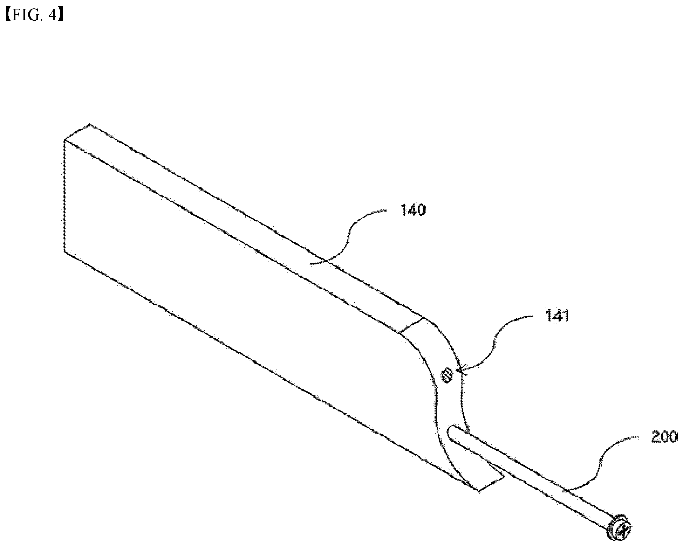

FIG. 4 is a partial cut-away perspective view of the auxiliary partition wall 140 into which the long bolt member 200 is inserted.

As shown in FIG. 4, the auxiliary partition wall 140 includes a coupling hole 141 drilled in a longitudinal direction of the auxiliary partition wall 140, and the long bolt member 200 passes through the coupling hole 141 of the auxiliary partition wall 140.

The long bolt member 200 inserted into the auxiliary partition wall 140 serves to fix the auxiliary partition wall 140 to a specific position of the pack case 100 as well as to improve the strength of the auxiliary partition wall 140. Specifically, in the battery module accommodated in the module region A illustrated in FIG. 2, a swelling phenomenon may occur due to an abnormal phenomenon in a charging/discharging process, and in this case, the auxiliary partition wall 140 configured to support the side surface of the battery module may be subjected to high stress due to the expanding battery module.

The auxiliary partition wall 140 of the present invention may have improved mechanical resistance to lateral stress, which may be caused by the battery module, due to the long bolt member 200 inserted therein.

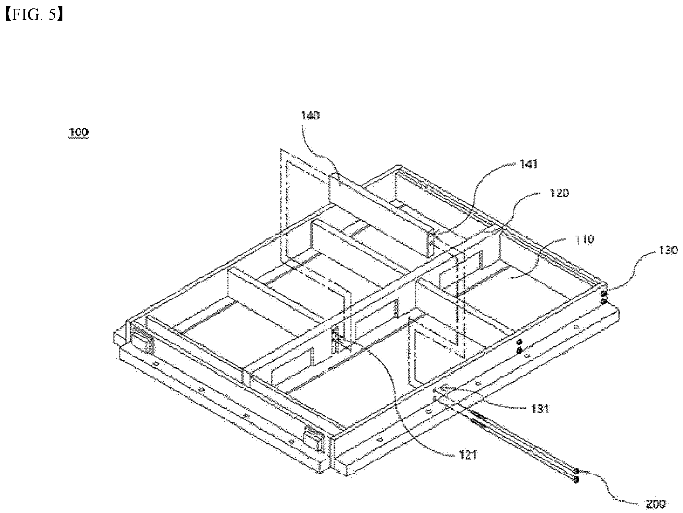

FIG. 5 illustrates the pack case 100 of FIG. 2, from which one auxiliary partition wall 140 is separated.

According to FIG. 5, the auxiliary partition wall 140 includes the coupling hole 141 formed by passing through both ends thereof, and the long bolt member 200 may pass through the coupling hole 141 and may be screw-coupled to the auxiliary partition wall 140. More specifically, the long bolt member 200 may pass through the side wall 130 and the auxiliary partition wall 140 such that the auxiliary partition wall 140 can be coupled to the side wall 130 and the main partition wall 120, and may be inserted into the main partition wall 120.

The auxiliary partition wall 140 may include one or more coupling holes 141, and in this case, a plurality of long bolt members 200 respectively corresponding to the coupling holes 141 may be coupled to the auxiliary partition wall 140.

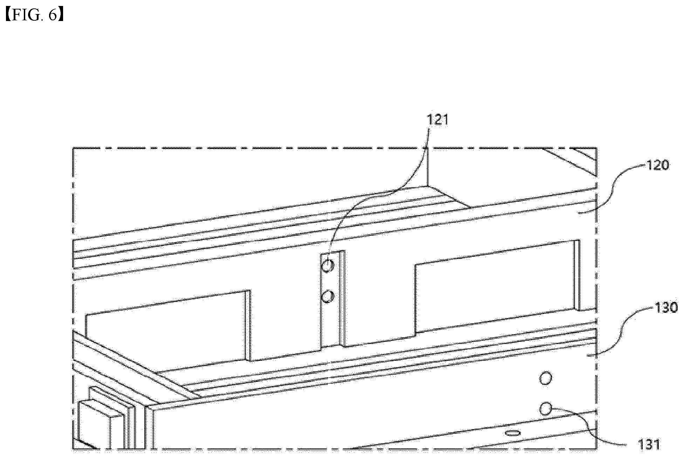

FIG. 6 partially illustrates the main partition wall 120 and the side wall 130 of FIG. 5 from which the auxiliary partition wall 140 is separated.

As shown in FIG. 6, the side wall 130 includes an insertion hole 131 drilled to correspond to a position of the coupling hole 141 of the auxiliary partition wall 140 so that the long bolt member 200 can pass through the insertion hole 131.

Further, as shown in FIG. 6, the main partition wall 120 includes an insertion groove 121 formed to correspond to the position of the coupling hole 141 of the auxiliary partition wall 140 so that the long bolt member 200 can be inserted into the insertion groove 121.

Thus, as shown in FIG. 5, the long bolt member 200 passes through the insertion hole 131 of the side wall 130 and the coupling hole 141 of the auxiliary partition wall 140, and is inserted into the insertion groove 121 of the main partition wall 120.

The long bolt member 200 may be screw-coupled to the auxiliary partition wall 140 and the main partition wall 120.

The coupling hole 141 included in the auxiliary partition wall 140 includes a female screw portion 141P having a thread, which is engaged with the thread T of the male screw portion 220P, formed at a position corresponding to a position of the male screw portion 220P of the long bolt member 200 inserted into the insertion groove 121.

In addition, the insertion groove 121 has a thread formed along a circumference of an inner side surface thereof.

The thread of the coupling hole 141 and the thread of the insertion groove 121 may be formed to be connected to each other without being disconnected.

Accordingly, the long bolt member 200 passing through the side wall 130 is inserted without resistance to a certain depth of the auxiliary partition wall 140, and is rotated so that the thread T of the male screw portion 220P is engaged with the thread of the female screw portion 141P at a position at which the female screw portion 141P begins, and is screwed into the insertion groove 121 of the main partition wall 120.

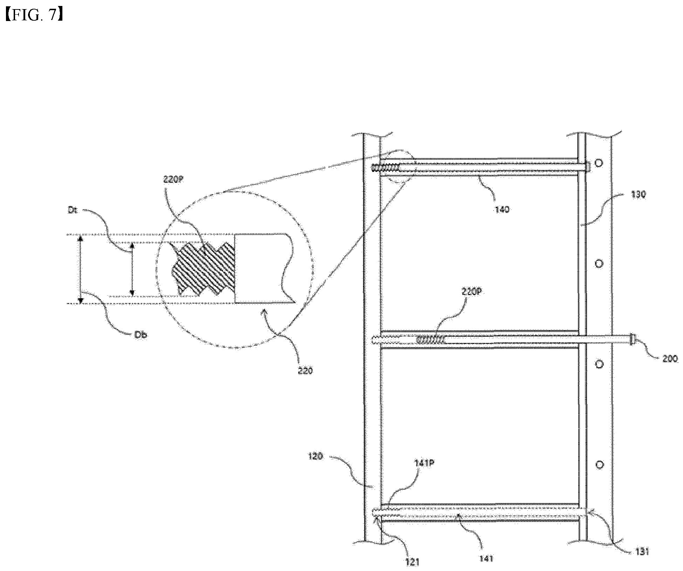

FIG. 7 is a cross-sectional view of the pack case 100 cut away to expose the insertion groove 121, the insertion hole 131, and the coupling hole 141 of the main partition wall 120, the side wall 130, and the auxiliary partition wall 140.

As shown in FIG. 7, the insertion groove 121 of the main partition wall 120 and the insertion hole 131 of the side wall 130 are formed at positions facing each other, and the auxiliary partition wall 140 is coupled to the main partition wall 120 and the side wall 130 such that the coupling hole 141 is aligned with the insertion groove 121 and the insertion hole 131. As the screw body 220 of the long bolt member 200 inserted through the side wall 130 passes through the auxiliary partition wall 140, the auxiliary partition wall 140 is fixed to the side wall 130 and the main partition wall 120.

The long bolt member 200 is simultaneously screw-coupled to the main partition wall 120 and the auxiliary partition wall 140 as the thread T of the male screw portion 220P is engaged with each of the thread formed in the insertion groove 121 of the main partition wall 120, and the thread formed in the female screw portion 141P at one side of the coupling hole 141 of the auxiliary partition wall 140 abutting the main partition wall 120.

The maximum diameter of the thread T included in the male screw portion 220P may be less than a diameter Db of the screw body 220 so that the long bolt member 200 has no resistance in the process of passing through the side wall 130 and the auxiliary partition wall 140 before being screw-coupled to the auxiliary partition wall 140 and the main partition wall 120. In this case, a diameter of the thread included in each of the insertion groove 121 and the female screw portion 141P of the coupling hole 141 is formed to correspond to the size of a diameter Dt of the thread T of the male screw portion 220P.

The battery pack of the present invention may further include an upper cover coupled to the pack case 100 so as to cover an upper portion of each battery module accommodated in the pack case 100.

The upper cover corresponds to a known technology, and thus a detailed description thereof will be omitted in the present invention.

### (Second embodiment)

A battery pack according to a second embodiment of the present invention is different from the battery pack according to the first embodiment in that an auxiliary partition wall 140 has a hollow structure therein.

FIG. 8 is a partial cut-away view of the auxiliary partition wall 140 included in the battery pack according to the second embodiment of the present invention.

The auxiliary partition wall 140 includes a coupling tube 142 formed inside the hollow by passing through both ends of the auxiliary partition wall 140, and a coupling hole 141 is formed inside the coupling tube 142 so that a long bolt member 200 can be coupled therethrough.

Thus, a cross section of the coupling tube 142 may have a ring shape.

The auxiliary partition wall 140 included in the battery pack according to the second embodiment of the present invention is lighter in weight due to the hollow structure thereof, while having a strength similar to that of the auxiliary partition wall 140 included in the battery pack according to the first embodiment.

The auxiliary partition wall 140 may include a rib 143 configured to connect an outer side surface of the coupling tube 142 and an inner side surface of the hollow of the auxiliary partition wall 140.

The rib 143 serves to fix the coupling tube 142 to the hollow interior of the auxiliary partition wall 140, and also serves to convey the rigidity of the long bolt member 200 inserted into the coupling tube 142 to an outer side surface of the auxiliary partition wall 140. Thus, the auxiliary partition wall 140 having a hollow structure may also have improved mechanical strength through the configuration of the rib 143.

### (Third embodiment)

A battery pack according to a third embodiment of the present invention is different from the battery pack according to the first embodiment in that a male screw portion 220P of a long bolt member 200 is formed at a boundary point between a screw body 220 and a screw head 210.

FIG. 9 is a cross-sectional view of a pack case 100 included in the battery pack according to the third embodiment, which is cut away to expose an insertion groove 121, an insertion hole 131, and a coupling hole 141 of a main partition wall 120, a side wall 130, and an auxiliary partition wall 140.

Due to the above-described structure of the long bolt member 200, the long bolt member 200 is simply inserted into the insertion groove 121 of the main partition wall 120 and is substantially screw-coupled to the side wall 130 and the auxiliary partition wall 140.

The coupling hole 141 includes a female screw portion 141P having a thread, which is engaged with a thread T of the male screw portion 220P, formed at a position corresponding to a position of the male screw portion 220P of the long bolt member 200 inserted into the insertion groove 121.

In addition, the insertion hole 131 has a thread formed along a circumference of an inner side surface thereof.

The thread of the coupling hole 141 and the thread of the insertion hole 131 may be formed to be connected to each other without being disconnected.

Accordingly, the long bolt member 200 passing through the side wall 130 is inserted without resistance to a certain depth of the auxiliary partition wall 140, and is rotated so that the thread T of the male screw portion 220P is engaged with the thread of the insertion hole 131 at a position at which the male screw portion 220P meets the insertion hole 131 of the side wall 130, and is screwed into the female screw portion of the coupling hole 141 included in the auxiliary partition wall 140.

In the long bolt member 200, a diameter Db of the screw body 220 may be less than the maximum diameter of the thread T included in the male screw portion 220P to allow the screw body 220, excluding the male screw portion 220P, to move without resistance until passing through the side wall 130 and the auxiliary partition wall 140. In this case, a diameter of the thread included in each of the insertion hole 131 and the female screw portion 141P of the coupling hole 141 is formed to correspond to the size of a diameter Dt of the thread T of the male screw portion 220P.

### (Fourth embodiment)

A battery pack according to a fourth embodiment of the present invention is different from the battery pack according to the first embodiment in that a male screw portion 220P of a long bolt member 200 is formed on each of an end portion of a screw body 220 and a point at which the screw body 220 meets a screw head 210.

That is, the male screw portion 220P includes a first male screw portion 220P1 formed at the end portion of the screw body 220 and a second male screw portion 220P2 formed at a boundary point between the screw body 220 and the screw head 210.

FIG. 10 is a cross-sectional view of a pack case 100 included in the battery pack according to the fourth embodiment, which is cut away to expose an insertion groove 121, an insertion hole 131, and a coupling hole 141 of a main partition wall 120, a side wall 130, and an auxiliary partition wall 140.

Due to the above-described structure of the long bolt member 200, the long bolt member 200 is simultaneously screw-coupled to the main partition wall 120, the side wall 130, and the auxiliary partition wall 140.

The coupling hole 141 includes female screw portions 141P each having a thread, which is engaged with a thread T of the male screw portion 220P, formed at a position corresponding to a position of the male screw portion 220P of the long bolt member 200 inserted into the insertion groove 121.

That is, the coupling hole 141 includes a first female screw portion 141P1 and a second female screw portion 141P2 at positions respectively corresponding to positions of the first male screw portion 220P1 and the second male screw portion 220P2 of the long bolt member 200 inserted into the insertion groove 121 of the main partition wall 120.

The first female screw portion 141P1 includes a thread engaged with the thread T of the first male screw portion 220P1 at a position corresponding to the position of the first male screw portion 220P1 of the long bolt member 200 inserted into the insertion groove 121.

The second female screw portion 141P2 includes a thread engaged with the thread T of the second male screw portion 220P2 at a position corresponding to the position of the second male screw portion 220P2 of the long bolt member 200 inserted into the insertion groove 121.

In addition, each of the insertion hole 131 and the insertion groove 121 has a thread formed along a circumference of an inner side surface thereof.

The thread formed in the first female screw portion 141P1 and the thread of the insertion groove 121 may be formed to be connected to each other without being disconnected and the thread formed in the second female screw portion 141P2 and the thread of the insertion hole 131 may be formed to be connected to each other without being disconnected.

Accordingly, the long bolt member 200 passing through the side wall 130 is inserted without resistance to a certain depth of the auxiliary partition wall 140, and is rotated so that the threads T of the first male screw portion 220P1 and the second male screw portion 220P2 are engaged with the threads of the first female screw portion 141P1 and the insertion hole 131 at the points at which the first male screw portion 220P1 meets the first female screw portion 141P1 of the coupling hole 141 and the second male screw portion 220P2 meets the insertion hole 131 of the side wall 130, so that the screw body 220 including the first male screw portion 220P1 is screwed into the insertion groove 121 included in the main partition wall 120.

In the long bolt member 200, a diameter Db of the screw body 220 may be less than the maximum diameter D2 of the thread T included in the second male screw portion 220P2 to allow the screw body 220, excluding the second male screw portion 220P2, to move without resistance until passing through the side wall 130 and the auxiliary partition wall 140. In this case, a diameter of the thread included in each of the insertion hole 131 and the second female screw portion 141P2 of the coupling hole 141 is formed to correspond to the size of a diameter D2 of the thread T of the second male screw portion 220P2.

In addition, the maximum diameter D1 of the thread T included in the first male screw portion 220P1 may be less than the diameter Db of the screw body 220 to allow the screw body 220 including the first male screw portion 220P1 to be inserted into and coupled to the insertion groove 121 of the main partition wall 120 and the first female screw portion 141P1 of the coupling hole 141. In this case, the diameter of the thread included in each of the insertion groove 121 and the first female screw portion 141P1 of the coupling hole 141 is formed to correspond to the size of the diameter D1 of the thread T included in the first male screw portion 220P1.

### [Description of Reference Numerals]

10: (related art) battery module
11: (related art) end plate
12: (related art) module frame
20: (related art) pack case
21: (related art) base plate
23: (related art) main partition wall
24: (related art) auxiliary partition wall
Aw: (related art) welding portion
100: pack case
110: base plate
120: main partition wall
121: insertion groove
130: side wall
131: insertion hole
140: auxiliary partition wall
141: coupling hole
141P: female screw portion
141P1: first female screw portion
141P2: second female screw portion
142: coupling tube
143: rib
200: long bolt member
210: screw head
220: screw body
220P: male screw portion
220P1: first male screw portion
220P2: second male screw portion
A: module region
T: thread
Dt: thread diameter
D1: (first male screw portion) thread diameter
D2: (second male screw portion) thread diameter
Db: body diameter

## Claims

1. A battery pack configured to accommodate a battery module including a cell stack in which a plurality of battery cells are stacked, the battery pack comprising:
a pack case (100) including a base plate (110) configured to support a lower portion of the battery module, a main partition wall (120) coupled to a center portion of the base plate (110), a side wall (130) coupled along an edge of the base plate (110), and an auxiliary partition wall (140) having both ends coupled to the main partition wall (120) and the side wall (130), respectively; and
a long bolt member (200) coupled to the pack case (100) by passing through the side wall (130) and the auxiliary partition wall (140) such that the auxiliary partition wall (140) is coupled to the main partition wall (120) and the side wall (130),
**characterized in that** the long bolt member (200) passes through the side wall (130) and the auxiliary partition wall (140) coupled to the side wall (130), and is coupled to the main partition wall (120).

2. The battery pack of claim 1, wherein a length of the long bolt member (200) is greater than a separation distance between the main partition wall (120) and the side wall (130).

3. The battery pack of claim 1, wherein the auxiliary partition wall (140) includes a coupling hole (141) formed by passing through both ends thereof, and
the long bolt member (200) passes through the coupling hole (141) and is screw-coupled to the auxiliary partition wall (140).

4. The battery pack of claim 3, wherein the main partition wall (120) includes an insertion groove (121) formed to correspond to a position of the coupling hole (141) of the auxiliary partition wall (140) to be coupled to the main partition wall (120),
the side wall (130) includes an insertion hole (131) formed through the side wall (130) to correspond to a position of the coupling hole (141) of the auxiliary partition wall (140) to be coupled to the side wall (130), and
the long bolt member (200) passes through the insertion hole (131) and the coupling hole (141) and is inserted into the insertion groove (121) to be screw-coupled to the pack case (100).

5. The battery pack of claim 3, wherein the auxiliary partition wall (140) includes a plurality of coupling holes (141) formed to be spaced apart from each other by a predetermined interval in a height direction of the auxiliary partition wall (141).

6. The battery pack of claim 1, wherein the long bolt member (200) includes a screw head (210) and a screw body (220) formed to extend from the screw head (210) and having a circular cross-section, and
the screw body (220) includes a male screw portion (220P) having a thread (T) formed to rotate around an outer surface thereof.

7. The battery pack of claim 6, wherein the male screw portion (220P) is formed at an end portion of the screw body (220).

8. The battery pack of claim 7, wherein the auxiliary partition wall (140) includes a coupling hole (141) formed by passing through both ends thereof,
the main partition wall (120) includes an insertion groove (121) formed to correspond to a position of the coupling hole (141) of the auxiliary partition wall (140) to be coupled to the main partition wall (120),
the side wall (130) includes an insertion hole (131) formed through the side wall (130) to correspond to a position of the coupling hole (141) of the auxiliary partition wall (140) to be coupled to the side wall (130), and
the coupling hole (141) includes a female screw portion (141P) having a thread (T), which is engaged with the thread (T) of the male screw portion (220P), formed at a position corresponding to a position of the male screw portion (220P) of the long bolt member (200) inserted into the insertion groove (121).

9. The battery pack of claim 6, wherein the male screw portion (220P) is formed at a boundary point between the screw body (220) and the screw head (210).

10. The battery pack of claim 9, wherein the auxiliary partition wall (140) includes a coupling hole (141) formed by passing through both ends thereof,
the main partition wall (120) includes an insertion groove (121) formed to correspond to a position of the coupling hole (141) of the auxiliary partition wall (140) to be coupled to the main partition wall (120),
the side wall (130) includes an insertion hole (131) formed through the side wall (130) to correspond to a position of the coupling hole (141) of the auxiliary partition wall (140) to be coupled to the side wall (130), and
the coupling hole (141) includes a female screw portion (141P) having a thread (T) engaged with the thread (T) of the male screw portion (220P) at a position corresponding to a position of the male screw portion (220P) of the long bolt member (200) inserted into the insertion groove (121).

11. The battery pack of claim 6, wherein the male screw portion (220P) includes a first male screw portion (220P1) formed at an end portion of the screw body (220) and a second male screw portion (220P2) formed at a boundary point between the screw body (220) and the screw head (210).

12. The battery pack of claim 11, wherein the auxiliary partition wall (140) includes a coupling hole (141) formed by passing through both ends thereof,
the main partition wall (120) includes an insertion groove (121) formed to correspond to a position of the coupling hole (141) of the auxiliary partition wall (140) to be coupled to the main partition wall (120),
the side wall (130) includes an insertion hole (131) formed through the side wall (130) to correspond to a position of the coupling hole (141) of the auxiliary partition wall (140) to be coupled to the side wall (130), and
the coupling hole (141) includes a first female screw portion (141P1) having a thread (T) engaged with a thread (T) of the first male screw portion (220P1) at a position corresponding to a position of the first male screw portion (220P1) of the long bolt member (200) inserted into the insertion groove (121) and a second female screw portion (141P2) having a thread (T) engaged with a thread (T) of the second male screw portion (220P2) at a position corresponding to a position of the second male screw portion (220P2) of the long bolt (200) member inserted into the insertion groove (121).

13. The battery pack of claim 1, wherein the auxiliary partition wall (140) has a hollow structure, and includes a coupling tube (142) formed by passing through both ends of the auxiliary partition wall (140), and a rib (143) configured to connect an outer side surface of the coupling tube (142) and an inner side surface of the auxiliary partition wall (140), and
the coupling tube (142) includes a coupling hole (141) therein.

14. The battery pack of claim 13, wherein the main partition wall (120) includes an insertion groove (121) formed to correspond to a position of the coupling hole (141) of the auxiliary partition wall (140) to be coupled to the main partition wall (120),
the side wall (130) includes an insertion hole (131) formed through the side wall (130) to correspond to a position of the coupling hole (141) of the auxiliary partition wall (140) to be coupled to the side wall (130), and
the long bolt member (200) passes through the insertion hole (131) and the coupling hole (141) and is inserted into the insertion groove (121) to be screw-coupled to the pack case (100).

## Patentansprüche

1. Batteriepack, welcher dazu eingerichtet ist, ein Batteriemodul aufzunehmen, welches einen Zellenstapel umfasst, in welchem eine Mehrzahl von Batteriezellen gestapelt ist, der Batteriepack umfassend:
ein Packgehäuse (100), welches eine Basisplatte (110) umfasst, welches dazu eingerichtet ist, einen unteren Abschnitt des Batteriemoduls zu stützen, eine Haupttrennwand (120), welche mit einem mittleren Abschnitt der Basisplatte (110) gekoppelt ist,
eine Seitenwand (130), welche entlang eines Randes der Basisplatte (110) gekoppelt ist, und eine Hilfstrennwand (140), deren beide Enden mit der Haupttrennwand (120) beziehungsweise der Seitenwand (130) gekoppelt sind; und
ein langes Bolzenelement (200), welches mit dem Packgehäuse (100) gekoppelt ist, indem es durch die Seitenwand (130) und die Hilfstrennwand (140) verläuft, sodass die Hilfstrennwand (140) mit der Haupttrennwand (120) und der Seitenwand (130) gekoppelt ist,
**dadurch gekennzeichnet, dass** das lange Bolzenelement (200) durch die Seitenwand (130) und die Hilfstrennwand (140) verläuft, welche mit der Seitenwand (130) gekoppelt ist, und mit der Haupttrennwand (120) gekoppelt ist.

2. Batteriepack nach Anspruch 1, wobei eine Länge des langen Bolzenelements (200) größer ist als ein Trennabstand zwischen der Haupttrennwand (120) und der Seitenwand (130).

3. Batteriepack nach Anspruch 1, wobei die Hilfstrennwand (140) ein Kopplungsloch (141) umfasst, welches gebildet ist, indem es durch beide Enden davon verläuft, und wobei das lange Bolzenelement (200) durch das Kopplungsloch (141) verläuft und mit der Hilfstrennwand (140) schraubgekoppelt ist.

4. Batteriepack nach Anspruch 3, wobei die Haupttrennwand (120) eine Einführnut (121) umfasst, welche derart gebildet ist, dass sie einer Position des Kopplungslochs (141) der Hilfstrennwand (140) entspricht, um mit der Haupttrennwand (120) gekoppelt zu sein,
wobei die Seitenwand (130) ein Einführloch (131) umfasst, welches durch die Seitenwand (130) derart gebildet ist, dass es einer Position des Kopplungslochs (141) der Hilfstrennwand (140) entspricht, um mit der Seitenwand (130) gekoppelt zu sein, und wobei das lange Bolzenelement (200) durch das Einführloch (131) und das Kopplungsloch (141) verläuft und in die Einführnut (121) eingeführt ist, um mit dem Packgehäuse (100) schraubgekoppelt zu sein.

5. Batteriepack nach Anspruch 3, wobei die Hilfstrennwand (140) eine Mehrzahl von Kopplungslöchern (141) umfasst, welche derart gebildet sind, dass sie in einem vorbestimmten Intervall in einer Höhenrichtung der Hilfstrennwand (141) voneinander beabstandet sind.

6. Batteriepack nach Anspruch 1, wobei das lange Bolzenelement (200) einen Schraubenkopf (210) und einen Schraubenkörper (220) umfasst, welcher derart gebildet ist, dass er sich von dem Schraubenkopf (210) erstreckt, und einen kreisförmigen Querschnitt aufweist, und
wobei der Schraubenkörper (220) einen männlichen Schraubenabschnitt (220P) umfasst, welcher ein Gewinde (T) aufweist, welches derart gebildet ist, dass es um eine äußere Fläche davon rotiert.

7. Batteriepack nach Anspruch 6, wobei der männliche Schraubenabschnitt (220P) an einem Endabschnitt des Schraubenkörpers (220) gebildet ist.

8. Batteriepack nach Anspruch 7, wobei die Hilfstrennwand (140) ein Kopplungsloch (141) umfasst, welches gebildet ist, indem es durch beide Enden davon verläuft, wobei die Haupttrennwand (120) eine Einführnut (121) umfasst, welche derart gebildet ist, dass sie einer Position des Kopplungslochs (141) der Hilfstrennwand (140) entspricht, um mit der Haupttrennwand (120) gekoppelt zu sein,
wobei die Seitenwand (130) ein Einführloch (131) umfasst, welches derart durch die Seitenwand (130) gebildet ist, dass es einer Position des Kopplungslochs (141) der Hilfstrennwand (140) entspricht, um mit der Seitenwand (130) gekoppelt zu sein, und wobei das Kopplungsloch (141) einen weiblichen Schraubenabschnitt (141P) umfasst, welcher ein Gewinde (T) aufweist, welches mit dem Gewinde (T) des männlichen Schraubenabschnitts (220P) in Eingriff steht, welcher an einer Position gebildet ist, welche einer Position des männlichen Schraubenabschnitts (220P) des langen Bolzenelements (200) entspricht, welches in die Einführnut (121) eingeführt ist.

9. Batteriepack nach Anspruch 6, wobei der männliche Schraubenabschnitt (220P) an einem Grenzpunkt zwischen dem Schraubenkörper (220) und dem Schraubenkopf (210) gebildet ist.

10. Batteriepack nach Anspruch 9, wobei die Hilfstrennwand (140) ein Kopplungsloch (141) umfasst, welches gebildet ist, indem es durch beide Enden davon verläuft, wobei die Haupttrennwand (120) eine Einführnut (121) umfasst, welche derart gebildet ist, dass sie einer Position des Kopplungslochs (141) der Hilfstrennwand (140) entspricht, um mit der Haupttrennwand (120) gekoppelt zu sein,
wobei die Seitenwand (130) ein Einführloch (131) umfasst, welches derart durch die Seitenwand (130) gebildet ist, dass es einer Position des Kopplungslochs (141) der Hilfstrennwand (140) entspricht, um mit der Seitenwand (130) gekoppelt zu sein, und wobei das Kopplungsloch (141) einen weiblichen Schraubenabschnitt (141P) umfasst, welcher ein Gewinde (T) aufweist, welches mit dem Gewinde (T) des männlichen Schraubenabschnitts (220P) in Eingriff steht, an einer Position, welche einer Position des männlichen Schraubenabschnitts (220P) des langen Bolzenelements (200) entspricht, welches in die Einführnut (121) eingeführt ist.

11. Batteriepack nach Anspruch 6, wobei der männliche Schraubenabschnitt (220P) einen ersten männlichen Schraubenabschnitt (220P1), welcher an einem Endabschnitt des Schraubenkörpers (220) gebildet ist, und einen zweiten männlichen Schraubenabschnitt (220P2) umfasst, welcher an einem Grenzpunkt zwischen dem Schraubenkörper (220) und dem Schraubenkopf (210) gebildet ist.

12. Batteriepack nach Anspruch 11, wobei die Hilfstrennwand (140) ein Kopplungsloch (141) umfasst, welches gebildet ist, indem es durch beide Enden davon verläuft, wobei die Haupttrennwand (120) eine Einführnut (121) umfasst, welche derart gebildet ist, dass sie einer Position des Kopplungslochs (141) der Hilfstrennwand (140) entspricht, um mit der Haupttrennwand (120) gekoppelt zu sein,
wobei die Seitenwand (130) ein Einführloch (131) umfasst, welches derart durch die Seitenwand (130) gebildet ist, dass es einer Position des Kopplungslochs (141) der Hilfstrennwand (140) entspricht, um mit der Seitenwand (130) gekoppelt zu sein, und wobei das Kopplungsloch (141) einen ersten weiblichen Schraubenabschnitt (141P1), welcher ein Gewinde (T) aufweist, welches mit einem Gewinde (T) des ersten männlichen Schraubenabschnitts (220P1) in Eingriff steht, an einer Position, welche einer Position des ersten männlichen Schraubenabschnitts (220P1) des langen Bolzenelements (200) entspricht, welches in die Einführnut (121) eingeführt ist, und einen zweiten weiblichen Schraubenabschnitt (141P2) umfasst, welcher ein Gewinde (T) aufweist, welches mit einem Gewinde (T) des zweiten männlichen Schraubenabschnitts (220P2) in Eingriff steht, an einer Position, welche einer Position des zweiten männlichen Schraubenabschnitts (220P2) des langen Bolzenelements (200) entspricht, welches in die Einführnut (121) eingeführt ist.

13. Batteriepack nach Anspruch 1, wobei die Hilfstrennwand (140) eine Hohlstruktur aufweist und ein Kopplungsrohr (142), welches gebildet ist, indem es durch beide Enden der Hilfstrennwand (140) verläuft, und eine Rippe (143) umfasst, welche dazu eingerichtet ist, eine äußere Seitenfläche des Kopplungsrohrs (142) und eine innere Seitenfläche der Hilfstrennwand (140) zu verbinden, und
wobei das Kopplungsrohr (142) ein Kopplungsloch (141) darin umfasst.

14. Batteriepack nach Anspruch 13, wobei die Haupttrennwand (120) eine Einführnut (121) umfasst, welche derart gebildet ist, dass sie einer Position des Kopplungslochs (141) der Hilfstrennwand (140) entspricht, um mit der Haupttrennwand (120) gekoppelt zu sein,
wobei die Seitenwand (130) ein Einführloch (131) umfasst, welches derart durch die Seitenwand (130) gebildet ist, dass es einer Position des Kopplungslochs (141) der Hilfstrennwand (140) entspricht, um mit der Seitenwand (130) gekoppelt zu sein, und wobei das lange Bolzenelement (200) durch das Einführloch (131) und das Kopplungsloch (141) verläuft und in die Einführnut (121) eingeführt ist, um mit dem Packgehäuse (100) schraubgekoppelt zu sein.

## Revendications

1. Bloc-batterie conçu pour accueillir un module de batterie comportant un empilement d'éléments dans lequel une pluralité d'éléments de batterie sont empilés, le bloc-batterie comprenant :
un boîtier de bloc (100) comportant une plaque de base (110) conçue pour supporter une partie inférieure du module de batterie, une cloison principale (120) couplée à une partie centrale de la plaque de base (110), une paroi latérale (130) couplée le long d'un bord de la plaque de base (110), et une cloison auxiliaire (140) ayant les deux extrémités couplées à la cloison principale (120) et à la paroi latérale (130), respectivement ; et
un organe de boulon long (200) couplé au boîtier de bloc (100) en passant à travers la paroi latérale (130) et la cloison auxiliaire (140) de sorte que la cloison auxiliaire (140) est couplée à la cloison principale (120) et à la paroi latérale (130),
**caractérisé en ce que** l'organe de boulon long (200) traverse la paroi latérale (130) et la cloison auxiliaire (140) couplée à la paroi latérale (130), et est couplé à la cloison principale (120).

2. Bloc-batterie selon la revendication 1, dans lequel une longueur de l'organe de boulon long (200) est supérieure à une distance de séparation entre la cloison principale (120) et la paroi latérale (130).

3. Bloc-batterie selon la revendication 1, dans lequel la cloison auxiliaire (140) comporte un trou de couplage (141) formé en passant à travers les deux extrémités de celle-ci, et
l'organe de boulon long (200) passe à travers le trou de couplage (141) et est vissé à la cloison auxiliaire (140).

4. Bloc-batterie selon la revendication 3, dans lequel la paroi de cloisonnement principale (120) comporte une rainure d'insertion (121) formée pour correspondre à une position du trou de couplage (141) de la paroi de cloisonnement auxiliaire (140) à coupler à la paroi de cloisonnement principale (120),
la paroi latérale (130) comporte un trou d'insertion (131) formé à travers la paroi latérale (130) pour correspondre à une position du trou de couplage (141) de la cloison auxiliaire (140) à coupler à la paroi latérale (130), et
l'organe de boulon long (200) passe à travers le trou d'insertion (131) et le trou de couplage (141) et est inséré dans la rainure d'insertion (121) pour être vissé au boîtier de bloc (100).

5. Bloc-batterie selon la revendication 3, dans lequel la cloison auxiliaire (140) comporte une pluralité de trous de couplage (141) formés pour être espacés les uns des autres d'un intervalle prédéterminé dans une direction de hauteur de la cloison auxiliaire (141).

6. Bloc-batterie selon la revendication 1, dans lequel l'organe de boulon long (200) comporte une tête de vis (210) et un corps de vis (220) formé pour s'étendre à partir de la tête de vis (210) et ayant une section transversale circulaire, et
le corps de vis (220) comporte une partie de vis mâle (220P) ayant un filetage (T) formé pour tourner autour d'une surface externe de celle-ci.

7. Bloc-batterie selon la revendication 6, dans lequel la partie de vis mâle (220P) est formée au niveau d'une partie d'extrémité du corps de vis (220).

8. Bloc-batterie selon la revendication 7, dans lequel la cloison auxiliaire (140) comporte un trou de couplage (141) formé en passant à travers les deux extrémités de celle-ci,
la cloison principale (120) comporte une rainure d'insertion (121) formée pour correspondre à une position du trou de couplage (141) de la cloison auxiliaire (140) à coupler à la cloison principale (120),
la paroi latérale (130) comporte un trou d'insertion (131) formé à travers la paroi latérale (130) pour correspondre à une position du trou de couplage (141) de la cloison auxiliaire (140) à coupler à la paroi latérale (130), et
le trou de couplage (141) comporte une partie de vis femelle (141P) dotée d'un filetage (T), qui s'engage avec le filetage (T) de la partie de vis mâle (220P), formée à une position correspondant à celle de la partie de vis mâle (220P) de l'organe de boulon long (200) inséré dans la rainure d'insertion (121).

9. Bloc-batterie selon la revendication 6, dans lequel la partie de vis mâle (220P) est formée à un point limite entre le corps de vis (220) et la tête de vis (210).

10. Bloc-batterie selon la revendication 9, dans lequel la cloison auxiliaire (140) comporte un trou de couplage (141) formé en passant à travers les deux extrémités de celle-ci,
la cloison principale (120) comporte une rainure d'insertion (121) formée pour correspondre à une position du trou de couplage (141) de la cloison auxiliaire (140) à coupler à la cloison principale (120),
la paroi latérale (130) comporte un trou d'insertion (131) formé à travers la paroi latérale (130) pour correspondre à une position du trou de couplage (141) de la cloison auxiliaire (140) à coupler à la paroi latérale (130), et
le trou de couplage (141) comporte une partie de vis femelle (141P) ayant un filetage (T) engagé avec le filetage (T) de la partie de vis mâle (220P) à une position correspondant à une position de la partie de vis mâle (220P) de l'organe de boulon long (200) inséré dans la rainure d'insertion (121).

11. Bloc-batterie selon la revendication 6, dans lequel la partie de vis mâle (220P) comporte une première partie de vis mâle (220P1) formée au niveau d'une partie d'extrémité du corps de vis (220) et une seconde partie de vis mâle (220P2) formée au niveau d'un point limite entre le corps de vis (220) et la tête de vis (210).

12. Bloc-batterie selon la revendication 11, dans lequel la cloison auxiliaire (140) comporte un trou de couplage (141) formé en passant à travers les deux extrémités de celle-ci,
la cloison principale (120) comporte une rainure d'insertion (121) formée pour correspondre à une position du trou de couplage (141) de la cloison auxiliaire (140) à coupler à la cloison principale (120),
la paroi latérale (130) comporte un trou d'insertion (131) formé à travers la paroi latérale (130) pour correspondre à une position du trou de couplage (141) de la cloison auxiliaire (140) à coupler à la paroi latérale (130), et
le trou de couplage (141) comporte une première partie de vis femelle (141P1) ayant un filetage (T) engagé avec un filetage (T) de la première partie de vis mâle (220P1) à une position correspondant à celle de la première partie de vis mâle (220P1) de l'organe de boulon long (200) inséré dans la rainure d'insertion (121), ainsi qu'une seconde partie de vis femelle (141P2) ayant un filetage (T) engagé avec un filetage (T) de la seconde partie de vis mâle (220P2) à une position correspondant à celle de la seconde partie de vis mâle (220P2) de l'organe de boulon long (200) inséré dans la rainure d'insertion (121).

13. Bloc-batterie selon la revendication 1, dans lequel la cloison auxiliaire (140) présente une structure creuse, et comporte un tube de couplage (142) formé en passant à travers les deux extrémités de la cloison auxiliaire (140), et une nervure (143) conçue pour relier une surface latérale extérieure du tube de couplage (142) et une surface latérale intérieure de la cloison auxiliaire (140), et
le tube de couplage (142) comporte un trou de couplage (141) à l'intérieur.

14. Bloc-batterie selon la revendication 13, dans lequel la cloison principale (120) comporte une rainure d'insertion (121) formée pour correspondre à une position du trou de couplage (141) de la cloison auxiliaire (140) à coupler à la cloison principale (120),
la paroi latérale (130) comporte un trou d'insertion (131) formé à travers la paroi latérale (130) pour correspondre à une position du trou de couplage (141) de la cloison auxiliaire (140) à coupler à la paroi latérale (130), et
l'organe de boulon long (200) passe à travers le trou d'insertion (131) et le trou de couplage (141) et est inséré dans la rainure d'insertion (121) pour être vissé au boîtier de bloc (100).
